# EUROPEAN PATENT SPECIFICATION

(11) **EP 2 386 443 B1**
(45) Date of publication and mention of the grant of the patent: **09.03.2016**
(21) Application number: 11165573.4
(22) Date of filing: 10.05.2011
(51) Int. Cl.: B60P 3/04, B62D 33/04, F42B 12/50, F42B 12/48

(54) **Improvements in and relating to pillar assemblies for transporters**
Verbesserungen von und in Zusammenhang mit Säulenanordnungen für Transporter
Améliorations de ou associées aux ensembles de montant pour transporteurs

(30) Priority: 10.05.2010 GB 201007762
(43) Date of publication of application: 16.11.2011
(73) Proprietor: Parkhouse Country Estates Limited, Milnthorpe Cumbria LA7 7RF (GB)
(72) Inventor: Houghton, Michael John, Milnthorpe, Cumbria LA7 7RF (GB)
(74) Representative: Appleyard Lees

(56) References cited:
- WO-A1-94/02337
- CA-A1- 2 452 416
- FR-A3- 2 530 558
- US-A- 6 107 569
- US-A1- 2006 108 832

## Description

### Field to the Invention

The present invention relates to livestock transporter pillar assemblies for use with livestock transporters, transporters comprising pillar assemblies and especially, but not limited to, pillar assemblies for use with livestock transporters and transporters for use in transporting livestock. The present invention further relates to associated methods.

### Background to the invention

Trailers and other transporters for use in transporting livestock generally comprise a number of levels each level having a platform to support the livestock. Each level may be divided into sections along its length with one or more gates, the gates being shut to create separate pens for the livestock.

Such transporters enable livestock to be transported economically and efficiently. Transporters for supporting livestock may comprise an integrated cab plus transport area or comprise a trailer forming a livestock area to be towed behind a tractor unit.

The transporters are provided with a range of services including lighting, hydraulic or pneumatic supply lines and food and water supplies. The arrangement of services within known transporters may create difficulties cleaning the transporters and may also expose them to damage.

US 2006/108832 A1 discloses 'A trailer edge rail system for use with a trailer having a removable cover includes a mount having a first end adapted to be secured to an edge of the trailer. The mount also includes at least one protrusion extending generally upwardly and parallel to a face of the edge of the trailer. The protrusion acts as a guide and aids in preventing an object (such as a snowmobile or the like) from being loaded too close to or driven off the edge of the trailer. A lip extends generally outwardly and transverse to the protrusion. In the preferred embodiment, the first end includes a C-shaped bracket. Alternatively, the first end may be molded with the trailer. The edge-rail system also preferably includes a longitudinally disposed cavity sized and shaped to accept one or more wires, hoses, or lights.'

CA 2 452 416 A1 discloses 'A trailer for transporting live poultry hatchlings has a cargo space for containing a plurality of perforated hatchling containers. The hatchling containers are stacked to create a central passage for air flow along the length of the trailer from which the air is admitted into a side duct on each side of the trailer through apertures in each side wall of the cargo space. This creates a transverse flow of air through the hatchling container s. A variety of measures may be undertaken alone or in combination to promote a similar transverse flow of air at all positions along the length of the trailer. The size of the apertures, spacing between apertures, cross-sectional area of the side ducts, cross-sectional area of the cargo space, or a combination thereof, may be varied along the length of the trailer to promote a similar transverse flow of air at all positions along the length of the trailer. The air collected within the side ducts may be exhausted and/or at least a porti on thereof may be recycled in order to maintain life sustaining environmental conditions within the trailer.'

It is an aim of the present invention to address at least one problem associated with the prior art, whether referred to herein or otherwise.

### Summary of the Invention

According to a first aspect of the present invention there is provided a livestock transporter pillar assembly, the pillar assembly comprising a pillar adapted to carry livestock services internally, wherein the livestock services comprise a water supply and/or a food supply and/or a drainage means and/or a conduit for livestock effluent.

Suitably, services the pillar is adapted to carry internally include one or more of: water supply, food supply, drainage and electricity.

Suitably, the pillar defines a duct for carrying services. Suitably, the pillar comprises a cavity.

Suitably, the livestock transporter pillar assembly comprises a hollow pillar adapted to carry livestock services.

Suitably, the livestock transporter pillar assembly further comprises one or more livestock services located within the pillar.

Suitably, the livestock transporter pillar assembly comprises an electric power supply cable. Suitably, the livestock transporter pillar assembly comprises a water supply conduit. Suitably, the livestock transporter pillar assembly comprises a food supply conduit. Suitably, the livestock transporter pillar assembly comprises a hydraulic or pneumatic supply line. Suitably, the livestock transporter pillar assembly comprises lights. Suitably, the livestock transporter pillar assembly comprises a button console. Suitably, the livestock transporter pillar assembly comprises drainage means. Suitably, the livestock transporter pillar assembly comprises a conduit for livestock effluent.

Suitably, the livestock transporter pillar assembly comprises an electric power supply cable located within the pillar. Suitably, the livestock transporter pillar assembly comprises a water supply conduit located within the pillar. Suitably, the livestock transporter pillar assembly comprises a food supply conduit located within the pillar. Suitably, the livestock transporter pillar assembly comprises a hydraulic or pneumatic supply line located within the pillar. Suitably, the livestock transporter pillar assembly comprises lights located within the pillar. Suitably, the livestock transporter pillar assembly comprises a button console located within the pillar. Suitably, the livestock transporter pillar assembly comprises drainage means located within the pillar. Suitably, the livestock transporter pillar assembly comprises a conduit for livestock effluent located within the pillar.

Suitably, livestock control systems are located within the pillar. Suitably, sensors are located within the pillar.

Suitably, the livestock transporter pillar assembly comprises one or more supports for supporting a deck. Suitably, the pillar assembly comprises one or more supports which project from the pillar in a longitudinal direction of a transporter when in a supporting position. Suitably, the supports are moveable relative to the pillar to allow variable positioning of a deck. Suitably, the supports can be moved to lie internally of the pillar when in a non supporting position. Suitably, the pillar comprises apertures through which the supports can protrude.

Suitably, the pillar assembly comprises an actuating mechanism for adjusting the position of said supports and which actuating mechanism is located within the pillar. Suitably, hydraulic and or pneumatic and/or electrical components of the actuating mechanism are located within the pillar.

Suitably, an actuating mechanism is mounted in a the pillar, and a support for a deck is arranged to protrude from the pillar through an aperture defined therein when arranged in a supporting position. Suitably, the actuating mechanism is coupled to a blanking means, arranged to cover the aperture defined in the pillar when the support is arranged in the supporting position. Suitably, the blanking means comprises a seal to seal the pillar against ingress of fluids when the aperture is covered by the blanking means. Suitably, the blanking means comprises a seal to seal the pillar against ingress of water when the aperture is covered by the blanking means. Suitably, the blanking means is an extension from the support. Suitably the blanking means is arranged to move as one with the support. Suitably, the blanking means is formed integrally with the support. Suitably, the blanking means is a load bearing component arranged to prevent rotation of the support beyond the supporting position when the support is moved from a non-supporting position to the supporting position. According to a second aspect of the present invention there is provided a livestock transporter comprising a livestock transporter pillar assembly, the livestock transporter pillar assembly comprising a pillar adapted to carry livestock services internally.

Suitably, the livestock transporter further comprises one or more livestock services located within the pillar.

Suitably, the livestock transporter comprises a livestock transporter pillar assembly according to the first aspect.

According to a third aspect of the present invention there is provided a method of transporting livestock, said method comprising loading livestock into a livestock transporter according to the second aspect.

### Brief Description of the Drawings

The present invention will now be described, by way of example only, and with reference to the following drawings, in which:

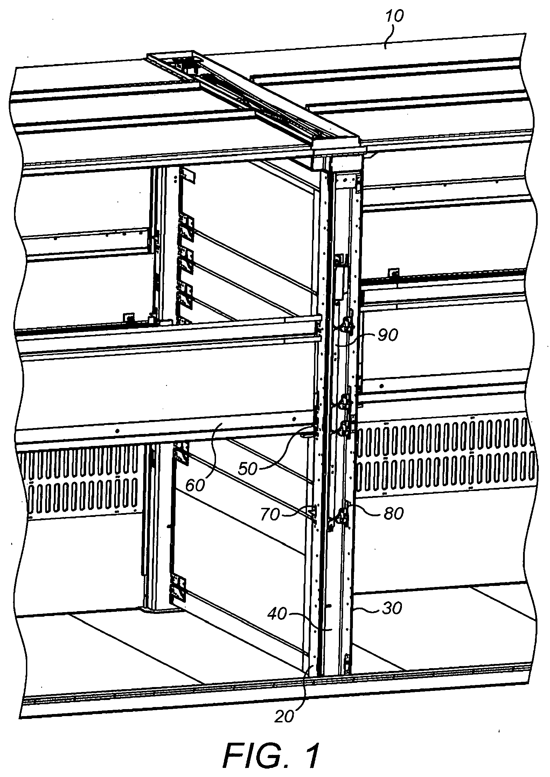

Figure 1 is an isometric view showing part of a transporter with the nearside side wall removed.

### Description of the Preferred Embodiments

As illustrated by Figure 1 and a transporter 10 comprises a pillar assembly 20 comprising a pillar 30 defining a duct 40 for carrying services (not shown).

The pillar assembly comprises supports 50 for supporting a deck 60. The supports 50 protrude from the pillar 30 in a longitudinal direction of a transporter when in a supporting position. The pillar 30 comprises apertures 70 through which the supports 50 can protrude.

The supports 50 can be moved to lie internally of the pillar 30 when in a non supporting position. When the supports are in the supporting position blanking plates 80 cover the apertures 70 to restrict the ingress of dirt to the duct 40 of the pillar 30.

The pillar assembly 10 comprises an actuating mechanism 90 for adjusting the position of the supports 50 and said actuating mechanism 90 is located within the pillar.

It will be appreciated that preferred embodiments of the invention may provide for efficient transportation of livestock.

Services carried by the duct 40 include electrical cables and water supply conduits but these have been omitted from the drawing for clarity.

## Claims

1. A livestock transporter pillar assembly (20), the livestock transporter pillar assembly (20) comprising a pillar (30) adapted to carry livestock services internally, wherein the livestock services comprise a water supply and/or a food supply and/or a drainage means and/or a conduit for livestock effluent.

2. A livestock transporter pillar assembly (20) according to claim 1, wherein the pillar (30) defines a duct (40) for carrying livestock services.

3. A livestock transporter pillar assembly (20) according to any preceding claim, wherein the pillar assembly (20) further comprises one or more livestock services located within the pillar (30).

4. A livestock transporter pillar assembly (20) according to any preceding claim, wherein the livestock transporter pillar assembly (20) comprises an electric power supply cable located within the pillar and/or a hydraulic or pneumatic supply line located within the pillar and/or lights located within the pillar and/or a button console located within the pillar (30).

5. A livestock transporter pillar assembly (20) according to any preceding claim, wherein livestock control systems are located within the pillar (30).

6. A livestock transporter pillar assembly (20) according to any preceding claim, wherein the livestock transporter pillar assembly (20) comprises one or more supports (50) for supporting a deck (60).

7. A livestock transporter pillar assembly (20) according to claim 6, wherein the supports (50) are moveable relative to the pillar (30) to allow variable positioning of a deck (60) and/or wherein the supports (50) can be moved to lie internally of the pillar (30) when in a non supporting position.

8. A livestock transporter pillar assembly (20) according to claim 6 or 7, wherein the livestock transporter pillar assembly (20) comprises an actuating mechanism (90) for adjusting the position of said supports (50) and which actuating mechanism is located within the pillar (30).

9. A livestock transporter pillar assembly (20) according to any of claims 6 to 9, wherein an actuating mechanism (90) is mounted in the pillar (30), and a support (50) for a deck (60) is arranged to protrude from the pillar (30) through an aperture (70) defined therein when arranged in a supporting position.

10. A livestock transporter pillar assembly (20) according to claim 9, wherein the actuating mechanism (90) is coupled to a blanking means, arranged to cover the aperture (70) defined in the pillar (30) when the support (50) is arranged in the supporting position.

11. A livestock transporter pillar assembly (20) according to claim 10, wherein the blanking means comprises a seal to seal the pillar (30) against ingress of fluids when the aperture (70) is covered by the blanking means and/or wherein the blanking means is a load bearing component arranged to prevent rotation of the support (50) beyond the supporting position when the support (50) is moved from a non-supporting position to the supporting position.

12. A livestock transporter (10) according to claim 11, wherein the livestock transporter pillar assembly (20) comprises a livestock transporter pillar assembly (20) according to any of claims 1 to 11.

13. A method of transporting livestock, said method comprising loading livestock into a transporter (10) according to claim 11 or 12.

## Patentansprüche

1. Viehtransporter-Säulenanordnung (20), wobei die Viehtransporter-Säulenanordnung (20) eine Säule (30) umfasst, die ausgelegt ist, Viehversorgungsdienste in ihrem Inneren zu befördern, wobei die Viehversorgungsdienste eine Wasserversorgung und/oder Futterversorgung und/oder ein Ableitungsmittel und/oder eine Leitung für Viehausscheidungen umfassen.

2. Viehtransporter-Säulenanordnung (20) nach Anspruch 1, wobei die Säule (30) ein Leitungsrohr (40) zum Befördern von Viehversorgungsdiensten ist.

3. Viehtransporter-Säulenanordnung (20) nach einem der vorhergehenden Ansprüche, wobei die Säulenanordnung (20) ferner eine oder mehrere Viehversorgungsdienste umfasst, die in der Säule (30) befindlich sind.

4. Viehtransporter-Säulenanordnung (20) nach einem der vorhergehenden Ansprüche, wobei
die Viehtransporter-Säulenanordnung (20) ein elektrisches Stromversorgungskabel, das in der Säule befindlich ist, und/oder eine hydraulische oder pneumatische Versorgungsleitung, die in der Säule befindlich ist, und/oder Lichter, die in der Säule befindlich sind, und/oder ein Schaltpult umfasst, das in der Säule (30) befindlich ist.

5. Viehtransporter-Säulenanordnung (20) nach einem der vorhergehenden Ansprüche, wobei
Viehsteuersysteme in der Säule (30) befindlich sind.

6. Viehtransporter-Säulenanordnung (20) nach einem der vorhergehenden Ansprüche, wobei
die Viehtransporter-Säulenanordnung (20) eine oder mehrere Stützen (50) zum Stützen eines Zwischenbodens (60) umfasst.

7. Viehtransporter-Säulenanordnung (20) nach Anspruch 6, wobei die Stützen (50) in Bezug auf die Säule (30) beweglich sind, um eine variable Positionierung eines Zwischenbodens (60) zu ermöglichen, und/oder wobei die Stützen (50) bewegt werden können, sodass sie im Inneren der Säule (30) liegen, wenn sie sich in einer nicht stützenden Position befinden.

8. Viehtransporter-Säulenanordnung (20) nach Anspruch 6 oder 7, wobei die Viehtransporter-Säulenanordnung (20) einen Betätigungsmechanismus (90) zum Einstellen der Position der Stützen (50) umfasst, wobei der Betätigungsmechanismus in der Säule (30) befindlich ist.

9. Viehtransporter-Säulenanordnung (20) nach einem der Ansprüche 6 bis 9, wobei ein Betätigungsmechanismus (90) in der Säule (30) befestigt ist und eine Stütze (50) für ein Zwischenboden (60) derart angeordnet ist, dass sie von der Säule (30) durch eine darin definierte Öffnung (70) hervorsteht, wenn sie in einer stützenden Position angeordnet ist.

10. Viehtransporter-Säulenanordnung (20) nach Anspruch 9, wobei der Betätigungsmechanismus (90) mit einem Verschließmittel gekoppelt ist, das angeordnet ist, die Öffnung (70) abzudecken, die in der Säule (30) definiert ist, wenn die Stütze (50) in der stützenden Position angeordnet ist.

11. Viehtransporter-Säulenanordnung (20) nach Anspruch 10, wobei das Verschließmittel eine Dichtung umfasst, um die Säule (30) gegen das Eintreten von Flüssigkeiten abzudichten, wenn die Öffnung (70) von dem Verschließmittel abgedeckt ist, und/oder wobei das Verschließmittel ein tragendes Bauteil ist, das angeordnet ist, eine Drehung der Stütze (50) über die stützende Position hinaus zu verhindern, wenn die Stütze (50) von einer nicht stützenden Position in die stützende Position bewegt wird.

12. Viehtransporter-Säulenanordnung (10) nach Anspruch 11, wobei die Viehtransporter-Säulenanordnung (20) eine Viehtransporter-Säulenanordnung (20) nach einem der Ansprüche 1 bis 11 umfasst.

13. Verfahren zum Transportieren von Vieh, wobei das Verfahren das Verladen von Vieh in einen Transporter (10) nach Anspruch 11 oder 12 umfasst.

## Revendications

1. Ensemble de montant de transporteur de bétail (20), l'ensemble de montant de transporteur de bétail (20) comprenant un montant (30) apte à porter des services au bétail intérieurement, dans lequel les services au bétail comprennent une fourniture d'eau et/ou une fourniture de nourriture et/ou des moyens de drainage et/ou un conduit pour l'effluent du bétail.

2. Ensemble de montant de transporteur de bétail (20) selon la revendication 1, dans lequel le montant (30) définit une gaine (40) pour convoyer les services au bétail.

3. Ensemble de montant de transporteur de bétail (20) selon l'une quelconque des revendications précédentes, dans lequel l'ensemble de montant (20) comprend en outre un ou plusieurs service(s) au bétail situé(s) à l'intérieur du montant (30).

4. Ensemble de montant de transporteur de bétail (20) selon l'une quelconque des revendications précédentes, dans lequel l'ensemble de montant de transporteur de bétail (20) comprend un câble d'alimentation de courant électrique qui est situé à l'intérieur du montant et/ou une ligne d'alimentation hydraulique ou pneumatique qui est située à l'intérieur du montant et/ou des lumières disposées à l'intérieur du montant et/ou une console à boutons installée à l'intérieur du montant (30).

5. Ensemble de montant de transporteur de bétail (20) selon l'une quelconque des revendications précédentes, dans lequel des systèmes de contrôle de bétail sont situés à l'intérieur du montant (30).

6. Ensemble de montant de transporteur de bétail (20) selon l'une quelconque des revendications précédentes, dans lequel l'ensemble de montant de transporteur de bétail (20) comprend un ou plusieurs support(s) (50) pour supporter un plancher (60).

7. Ensemble de montant de transporteur de bétail (20) selon la revendication 6, dans lequel les supports (50) sont mobiles par rapport au montant (30) de manière à permettre le positionnement variable d'un plancher (60), et/ou dans lequel les supports (50) peuvent être déplacés pour être rangés à l'intérieur du montant (30) lorsqu'ils ne se trouvent pas dans une position de support.

8. Ensemble de montant de transporteur de bétail (20) selon la revendication 6 ou 7, dans lequel l'ensemble de montant de transporteur de bétail (20) comprend un mécanisme d'actionnement (90) pour régler la position desdits supports (50), ledit mécanisme d'actionnement étant situé à l'intérieur du montant (30).

9. Ensemble de montant de transporteur de bétail (20) selon l'une quelconque des revendications 6 à 9, dans lequel un mécanisme d'actionnement (90) est monté dans le montant (30), et un support (50) pour un plancher (60) est agencé de manière à faire saillie à partir du montant (30) à travers une ouverture (70) définie dans celui-ci lorsqu'il est agencé dans une position de support.

10. Ensemble de montant de transporteur de bétail (20) selon la revendication 9, dans lequel le mécanisme d'actionnement (90) est couplé à des moyens d'obturation agencés de manière à couvrir l'ouverture (70) définie dans le montant (30) lorsque le support (50) est disposé dans la position de support.

11. Ensemble de montant de transporteur de bétail (20) selon la revendication 10, dans lequel les moyens d'obturation comprennent un joint pour isoler le montant (30) contre toute entrée de fluides lorsque l'ouverture (70) est couverte par les moyens d'obturation, et/ou dans lequel les moyens d'obturation sont un composant de support de charge agencé de manière à empêcher la rotation du support (50) au-delà de la position de support lorsque le support (50) est déplacé à partir d'une position de non-support à la position de support.

12. Transporteur de bétail (10) selon la revendication 11, dans lequel l'ensemble de montant de transporteur de bétail (20) comprend un ensemble de montant de transporteur de bétail (20) selon l'une quelconque des revendications 1 à 11.

13. Procédé de transport de bétail, ledit procédé comprenant le chargement de bétail dans un transporteur (10) selon la revendication 11 ou 12.
